# EUROPÄISCHE PATENTSCHRIFT

(11) **EP 3 707 569 B1**
(45) Veröffentlichungstag und Bekanntmachung des Hinweises auf die Patenterteilung: **23.08.2023**
(21) Anmeldenummer: 18814773.0
(22) Anmeldetag: 05.11.2018
(51) Int. Cl.: G05B 19/404, G05D 1/02, G06T 7/80

(54) **KALIBRIERUNG EINES STATIONÄREN KAMERASYSTEMS ZUR POSITIONSERFASSUNG EINES MOBILEN ROBOTERS**
CALIBRATION OF A STATIONARY CAMERA SYSTEM FOR DETECTING THE POSITION OF A MOBILE ROBOT
ÉTALONNAGE D'UN SYSTÈME DE CAMÉRA FIXE PERMETTANT LA DÉTECTION DE LA POSITION D'UN ROBOT MOBILE

(30) Priorität: 10.11.2017 DE 102017126495
(43) Veröffentlichungstag der Anmeldung: 16.09.2020
(73) Patentinhaber: Zauberzeug GmbH, 48329 Havixbeck (DE)
(72) Erfinder: SCHINDLER, Falko, 48145 Münster (DE)
(74) Vertreter: RCD Patent Giesen, Schmelcher & Griebel Patentwanwälte PartG mbB
(86) Internationale Anmeldenummer: PCT/DE2018/100895
(87) Internationale Veröffentlichungsnummer: WO 2019/091513

(56) Entgegenhaltungen:
- US-A1- 2006 146 142
- US-A1- 2006 285 752
- US-A1- 2007 034 731
- US-A1- 2010 274 390
- US-A1- 2016 239 013

## Beschreibung

Die Erfindung betrifft ein Verfahren zur Kalibrierung eines stationären Kamerasystems zur Positionserfassung eines mobilen Roboters, wobei der Roboter auf einer Fläche beweglich ist und das Kamerasystem eine oder mehrere Kameras zur zumindest teilweisen Erfassung der Fläche aufweist. Die Erfindung betrifft ferner ein stationäres Kamerasystem, welches zur Durchführung des Verfahrens eingerichtet ist.

### Stand der Technik

Aus dem Stand der Technik sind verschiedene Anordnungen von stationären Kameras in Verbindung mit mobilen Roboterfahrzeugen, beispielsweise zur Bodenbearbeitung bekannt.

Derartige Anordnungen weisen eine oder mehrere Kameras auf, die fest installiert beispielsweise aus dem Zenit oder der Vogelperspektive heraus eine vorgegebene Fläche erfassen.

So beschreibt beispielsweise die DE 10 2007 053 311 A1 ein Ansteuersystem für ein Roboterfahrzeug mit mindestens einer Kamera, die zum Erzeugen von Bilddaten eines Arbeitsbereiches sowie des Roboterfahrzeugs ausgebildet ist.

Dabei ist eine Logikeinheit vorgesehen, die in der Lage ist, die von der mindestens einen Kamera erzeugten Bilddaten zu verarbeiten und auf Basis dieser Daten die Position des Roboterfahrzeuges zu erkennen und entsprechende Fahranweisungen zu berechnen, die dann mit einer Sendeeinheit, beispielsweise einer WLAN-Sendeeinheit, an eine Empfangseinheit des Roboterfahrzeuges übermittelt werden.

Erforderlich ist dabei eine Auswertung der durch die mindestens eine Kamera erzeugten Bilddaten zwecks einer Positionsbestimmung des Roboterfahrzeugs auf der Arbeitsfläche. Diese setzt eine präzise Kalibrierung der wenigstens einen Kamera im Hinblick auf den Arbeitsbereich voraus, welcher in der Regel durch ein aufwendiges, individuelles Einmessen einer Vielzahl von sogenannten Passpunkten auf der Arbeitsfläche erfolgt.

Das Dokument US 2007/034731 A1 beschreibt ein Verfahren zur Kalibrierung eines stationären Kamerasystems zur Positionserfassung eines mobilen Roboters, wobei der Roboter auf einer Fläche beweglich ist und zumindest einen richtungsgebenden Marker aufweist, wobei das Kamerasystem eine oder mehrere Kameras zur zumindest teilweisen Erfassung der Fläche auf jeweils einer Bildebene aufweist, wobei zumindest eine erste Kamera einen Neigungssensor zur Erfassung eines Nickwinkels sowie eines Rollwinkels gegenüber der Lotrechten aufweist. Das Verfahren umfasst die Schritte: Bereitstellen zumindest einer ersten oder einer ersten und weiterer Kameras und Durchführen einer externen Kalibrierung für die zumindest eine erste Kamera.

Aus der US 2016/239013 A1 ist ferner ein System und Verfahren zum Kalibrieren der Position einer einen Endeffektor tragenden Vorrichtung relativ zu aufeinanderfolgenden Werkstücken bekannt. Dabei wird die Kalibrierung unter Verwendung eines Positionierungssystems durchgeführt.

Die US 2010/274390 A1 beschreibt ein System und ein Verfahren zur hochpräzisen Positionierung eines Objekts an einem Ort im Raum, bei welchem ein Objekt von einem Industrieroboter wiederholt gegriffen und gehalten wird. Zwischen den Wiederholungen erfolgt die Ermittlung von Korrekturwerten zur Verbesserung der Positionierung aufgrund von Bildaufnahmen.

Die Schrift US 2006/146142 A1 beschreibt ein multiperspektivisches Videoaufnahmesystem, wobei das Videoaufnahmesystem ein Zielobjekt mit einer Vielzahl von Kameras aus multiperspektivischer Sicht erfasst und wobei Videobilddaten eines Bewegtbilds, die für jedes Einzelbild der Vielzahl von Kameras synchronisiert sind, mit Kameraparametern für jedes Einzelbild jeder der Kameras und Zuordnungsinformationen, die die Videobilddaten des Bewegtbilds wechselseitig mit den Kameraparametern verknüpfen, für jedes Einzelbild erfasst werden

Zudem ist aus der US 2006/285752 A1 dreidimensionales Messverfahren zur Durchführung einer dreidimensionalen Messung bekannt, bei welchem die Sichtfelder einer Anzahl von Kameras einander überlappen.

### Offenbarung der Erfindung

Aufgabe der vorliegenden Erfindung ist die Angabe eines einfachen und kostengünstigen Verfahrens zur Kalibrierung eines stationären Kamerasystems zur Positionserfassung eines mobilen Roboters.

Die Lösung der Aufgabe erfolgt erfindungsgemäß durch die Merkmale der unabhängigen Ansprüche. Vorteilhafte Ausgestaltungen der Erfindung sind in den Unteransprüchen angegeben.

Nicht beansprucht, aber zur Erläuterung der Erfindung beschrieben wird ein Verfahren zur Kalibrierung eines stationären Kamerasystems zur Positionserfassung und/oder Positionsverfolgung eines mobilen Roboters, wobei der Roboter auf einer vorzugsweise horizontalen und/oder ebenen Fläche beweglich ist und zumindest einen richtungsgebenden Marker aufweist, wobei das Kamerasystem mehrere Kameras zur zumindest teilweisen Erfassung der Fläche auf jeweils einer Bildebene aufweist, wobei zumindest eine erste Kamera einen Neigungssensor zur Erfassung eines Nickwinkels sowie eines Rollwinkels gegenüber der Lotrechten aufweist, mit den Schritten
a) Bereitstellung zumindest einer ersten oder einer ersten und weiterer Kameras mit einer inneren Kalibrierung;
b) Durchführung einer externen Kalibrierung für die zumindest eine erste Kamera, durch die Ausführung der Schritte
   i. Wahl einer Befestigungsposition der ersten Kamera über der Fläche;
   ii. Bestimmung des Nickwinkels und des Rollwinkels der Blickrichtung der zumindest ersten Kamera gegenüber der Lotrechten mittels des Neigungssensors;
   iii. Bestimmung der Kamerahöhe der ersten Kamera über dem richtungsgebenden Marker des Roboters;
   iv. Festlegung eines vorzugsweise kartesischen Koordinatensystems auf Basis der Blickrichtung der ersten Kamera und der Position der ersten Kamera über der Fläche;
   v. Bestimmung einer Abbildungsfunktion auf Basis der inneren Kalibrierung sowie der Kamerahöhe, des Nickwinkels und des Rollwinkels zur Abbildung eines Bildpunkts der Bildebene der ersten Kamera auf einen Punkt auf der Fläche.
   vi. Bestimmung der Position des Roboters in der Fläche durch die Erfassung zumindest eines ersten Punkts des richtungsgebenden Markers durch die zumindest erste Kamera, und der Abbildung des ersten Punkts von der Bildebene auf die Fläche.

Dabei ist unter einem stationären Kamerasystem eine Anordnung aus einer Bildverarbeitungseinrichtung und mindestens einer Kamera zu verstehen, welche außerhalb vom Roboter und von diesem entkoppelt angeordnet ist, und wobei die Bildverarbeitungseinrichtung eingerichtet ist, ein stationäres, an die erfasste Fläche gebundenes Bezugssystem zu schaffen. Dies schließt nicht aus, dass eine Kamera oder auch die zumindest eine Kamera beweglich, beispielsweise entlang einer Schiene verfahrbar, angeordnet ist.

Für einen geometrischen Raum, in welchem die erfasste Fläche liegt, wird auf Basis von Position und Blickrichtung der ersten Kamera ein Bezugssystem geschaffen, in welchem Positionen über das festgelegte Koordinatensystem eindeutig beschrieben werden können. Dabei handelt es sich vorteilhaft um ein kartesisches Koordinatensystem, von welchem zwei Achsen innerhalb der erfassten Fläche liegen, und/oder eine Achse entlang der Lotrechten über der erfassten Fläche liegt.

Ferner kann der richtungsweisende Marker eine extra zu diesem Zweck aufgebrachte, beispielsweise unsymmetrische Farbmarkierung sein, ebenso kann der richtungsweisende Marker aber auch implizit durch zumindest zwei unterscheidbare, vorzugsweise gut detektierbare Lampen, Werkzeuge, Ecken oder Kanten des Roboters gegeben sein. Vorteilhaft, aber nicht zwingend, wird der richtungsgebende Marker durch zumindest zwei zur Detektion geeignete Punkte auf dem Roboter gebildet, welche vorzugsweise auf derselben Höhe über der Fläche angeordnet sind. Sofern sie nicht auf derselben Höhe angeordnet sind, kann für die verfahrensgemäße Bestimmung der Kamerahöhe für die erste Kamera eine mittlere Höhe des richtungsgebenden Markers herangezogen werden, bezüglich der bei einer Auswertung der einzelnen Punkte des Markers ein jeweiliger Offset zu berücksichtigten ist. Vorteilhaft kann der richtungsweisende Marker in Form von zwei rotationssymmetrischen Markierungen, beispielsweise in Form eines Rings sowie eines Kreises, gegeben sein und das Verfahren ausgestaltet sein, den richtungsweisenden Marker anhand dieser Formen zu detektieren.

Der Neigungssensor erfasst den Nick- und Rollwinkel der Kamera gegenüber der Lotrechten, oder in äquivalenter Weise beispielsweise gegenüber der Horizontalen, und stellt diese der Bildverarbeitungseinrichtung des stationären Kamerasystems zur Verfügung.

Die Bestimmung der Kamerahöhe kann manuell, unter Zuhilfenahme eines Entfernungsmessers, oder auch automatisch durch einen Entfernungsmesser des stationären Kamerasystems erfolgen. Für eine manuelle Bestimmung kann das Kamerasystem eine entsprechende Eingabeschnittstelle aufweisen. Alternativ kann ein Marker bekannter Größe durch ein geeignetes Bildverarbeitungsverfahren maßstabsunabhängig erkannt und die Kamerahöhe aus dessen Größe im Bild sowie aus Nick- und Rollwinkel berechnet werden.

Das Koordinatensystem wird ohne Einschränkung der Allgemeinheit vorzugsweise als kartesisches Koordinatensystem festgelegt.

Die Bestimmung der Abbildungsfunktion erfolgt vorzugsweise durch die Bildverarbeitungseinrichtung, welche in Form eines Prozessrechners oder mehrerer, auch räumlich verteilter Mikroprozessoreinheiten, Logikeinheiten, Personal Computern, etc. gegeben sein kann.

Zum Ablauf des Verfahrens kann eine Steuereinrichtung gegeben sein, durch welche ein Kalibrierprogramm ausgeführt wird. Die Steuereinrichtung kann auf demselben Prozessrechner oder denselben mehreren, auch räumlich verteilten Mikroprozessoreinheiten, Logikeinheiten, Personal Computern, etc. implementiert sein.

Eine Positionsänderung des Roboters kann manuell oder, beispielsweise im Falle eines selbstfahrenden und fernsteuerbaren Roboters, automatisch durch die Steuereinrichtung erfolgen. Die Fernsteuerung durch die Steuereinrichtung kann gemäß dem Stand der Technik, beispielsweise über eine Funkkommunikationsschnittstelle, erfolgen.

Das Verfahren bietet den Vorteil, dass eine Kalibrierung des Kamerasystems in der Einsatzumgebung mit sehr wenig manuellem Aufwand erzielbar ist. Dies ist insbesondere in solchen Einsatzumgebungen von Vorteil, welche schwer zugänglich sind, in denen ein längerer Aufenthalt gefährlich ist, oder welche schmutzig oder starken Umwelteinflüssen unterlegen sind. Darunter sind beispielsweise auch die Installationen in Tierställen zu sehen.

Durch die Verwendung von Kameras, welche eine innere Kalibrierung aufweisen, kann aus deren Parametern, welche den 2D-Hauptpunkt, die Brennweite, den Maßstabsunterschied, die Scherung und gegebenenfalls nichtlineare Bildfehler beschreiben, ein auf der Bildebene erfasstes Objekt maßstabsgetreu rekonstruiert werden. So können unter Bereitstellung des Nick- und Rollwinkels der über der Fläche installierten Kamera, sowie der Höhe der Kamera, konkret ihres Projektionszentrums, im Bezug zum richtungsgebenden Marker die Parameter für eine Abbildungsfunktion eindeutig bestimmt werden. Über die damit erzielte Abbildungsfunktion ist ausgehend von den Daten auf der Bildebene eine Positions- sowie eine Richtungsbestimmung des Roboters auf der erfassten Fläche erzielbar.

Sofern die Parameter einer inneren Kalibrierung, konkret 2D-Hauptpunkt, Brennweite, Maßstabsunterschied, Scherung und gegebenenfalls nichtlineare Bildfeher, nicht herstellerseitig gegeben sind, kann ihre Bestimmung unabhängig vom Einsatzort des Kamerasystems zum Beispiel im Labor erfolgen.

Die Bereitstellung zumindest einer ersten oder mehrerer Kameras mit einer inneren Kalibrierung kann erfolgen durch die Schritte
i. Bereitstellung und orthogonale Positionierung einer nicht kalibrierten Kamera vor einem Kalibriermuster mit Kreuzungspunkten;
ii. Einmessen des Kalibriermusters sowie des Projektionszentrums der Kamera;
iii. Detektion der Kreuzungspunkte in der Bildebene der Kamera;
iv. Bestimmung der Abbildungsfunktion auf Grundlage des eingemessenen sowie der detektierten Kreuzungspunkte des Kalibriermusters.

Über derartige, vergleichsweise einfache Verfahrensschritte lässt sich eine innere Kalibrierung erzielen, deren Genauigkeit den hier gestellten Anforderungen in der Regel genügt. Dazu wird beispielsweise die zu kalibrierende Kamera in einer festen Halterung orthogonal vor einem Schachbrettmuster installiert, dessen Kreuzungspunkte mit geläufiger Bildverarbeitungssoftware detektiert werden können. Das Schachbrett sowie das Projektionszentrum der Kamera werden einmalig exakt eingemessen. Für Kameras gleicher Bauart kann diese Messung für alle Kameras übernommen werden. Zwischen den bekannten Kreuzungspunkten und den in einem einzigen Bild detektierten Punkten lässt sich eine projektive Abbildung mit acht Freiheitsgraden bestimmen, die auch als Kalibriermatrix bezeichnet wird. Mit bekannten Algorithmen aus der Photogrammetrie, z.B. der Singulärwertzerlegung einer kombinierten Koordinatenmatrix, sind deren Parameter bestimmbar.

Erfindungsgemäß ist vorgesehen, dass weitere Kameras des Kamerasystems gemäß des Patentanspruchs 1 relativ zur ersten kalibriert werden.

Zur Kalibrierung einer weiteren Kamera im Bezug zur ersten Kamera, wobei die weitere Kamera eine innere Kalibrierung zur Erfassung eines Teils der Fläche aufweist, und wobei sich die durch die erste Kamera erfassbare Fläche mit der von der weiteren Kamera erfassten Teilfläche in zumindest einer Überlappungsfläche teilweise überschneidet, weist das Verfahren in Ergänzung zu den vorbeschriebenen Schritten a) und b) für die Erfindung kennzeichnend die Schritte auf
c) Durchführung einer relativen externen Kalibrierung für die die weitere Kamera im Bezug zur ersten Kamera, durch die Ausführung der Schritte
i. Positionierung des Roboters in der Überlappungsfläche;
ii. Bestimmung von zumindest einem Punkt des richtungsgebenden Markers durch die zumindest erste Kamera zwecks Bestimmung von Position und Ausrichtung des Roboters auf der Fläche; Erfassen von zugehörigen Bildpunkten in der Bildebene der weiteren Kamera;
iii. Veränderung der Position des Roboterfahrzeugs und Wiederholung von Schritt ii bis mindestens ausreichend viele unabhängige Datenpaare zur Bestimmung der Parameter einer Abbildungsfunktion vorliegen;
iv. Bestimmung einer Abbildungsfunktion für die weitere Kamera zwecks Ermittlung von Position und Ausrichtung des Roboters über die Bildebene der weiteren Kamera.

Das Verfahren zur Kalibrierung einer weiteren Kamera erfordert keine Kenntnis der Kameraposition, der Kamerahöhe oder der Nick- und Rollwinkel, dafür aber weiterer Datenpaare, welche durch eine Erfassung von Paaren aus Bildpunkt und zugehöriger Position in der Fläche bei wiederholter Positionsänderung des Roboters gewinnbar sind.

In entsprechender Weise können sukzessiv weitere Kameras auf Grundlage bereits kalibrierter Kameras eingemessen werden.

Vorteilhaft ist das Verfahren derart ausgestaltet, dass das Kamerasystem mehrere weitere Kameras mit einer inneren Kalibrierung zur Erfassung jeweils eines Teils der Fläche aufweist, wobei sich die durch die weiteren Kameras jeweils erfassbaren Flächen mit zumindest einer der von einer anderen Kamera erfassten Teilfläche in einer jeweiligen Überlappungsfläche zumindest teilweise überschneiden, und wobei zumindest für eine der weiteren Kameras eine externe Kalibrierung nach einer der vorherigen Ansprüche durchgeführt ist, mit einem Schritt für eine
d) Sukzessive Durchführung einer relativen externen Kalibrierung für eine weitere Kamera im Bezug zu einer extern kalibrierten Kamera, durch die Ausführung der Schritte
i. Positionierung des Roboters in der Überlappungsfläche zwischen kalibrierter und der zu kalibrierenden weiteren Kamera;
ii. Bestimmung von zumindest einem Punkt des richtungsgebenden Markers durch die kalibrierte Kamera zwecks Bestimmung von Position und Ausrichtung des Roboters auf der Fläche; Erfassen von zugehörigen Bildpunkten in der Bildebene der zu kalibrierenden weiteren Kamera;
iii. Veränderung der Position des Roboterfahrzeugs und Wiederholung von Schritt ii bis mindestens ausreichend viele unabhängige Datenpaare zur Bestimmung der Parameter einer Abbildungsfunktion vorliegen;
iv. Bestimmung der Abbildungsfunktion für die zu kalibrierende weitere Kamera zwecks Ermittlung von Position und Ausrichtung des Roboters über die Bildebene der zu kalibrierenden weiteren Kamera.
v. Wiederholung der Schritte i. bis iv. für eine sukzessive weitere Kamera, durch welche eine Teilfläche erfassbar ist, die eine Überlappungsfläche mit einer durch eine kalibrierte Kamera erfasste Teilfläche aufweist.

In einer vorteilhaften Ausgestaltung weist das Verfahren eine Nachführung der Kalibrierung für eine beispielsweise entlang von Schienen bewegliche Kamera auf.

In einer vorteilhaften Ausgestaltung weist das Verfahren dazu die Schritte auf, dass
i. zumindest eine Position einer Kamera des Kamerasystems verändert wird,
ii. die Veränderung der Position der Kamera gegenüber dem Koordinatensystem erfasst wird und
iii. die Positionsveränderung der Kamera durch eine Änderung der zugehörigen Abbildungsfunktion kompensiert wird.

Dabei wird im Schritt ii. die Veränderung der Position der Kamera vorteilhaft automatisch und über die bewegte Kamera selbst erfasst, wobei die Veränderung eines durch die Kamera erfassten Bildhintergrunds oder eines in der Umgebung angebrachten künstlichen Markers detektiert wird und aus der Veränderung des Bildhintergrunds die Positionsveränderung der Kamera ermittelt wird.

Ein derartiger Verfahrensschritt bietet den Vorteil, dass bei einer Positionsverfolgung des Roboters entlang langer Wege die Anzahl der Kameras reduziert werden kann, indem der Roboter von einer beispielsweise an einer Deckenschiene verfahrbar befestigten Kamera verfolgt wird.

In einer weiteren vorteilhaften Ausgestaltung des Verfahrens werden in den Überlappungsflächen von zwei Kameras gleichzeitig erfasste Positionskoordinaten des Roboters regelmäßig zur Überprüfung und Nachkalibrierung der Abbildungsfunktion verwendet. Durch beispielsweise eine Mittelung der jeweiligen Parameter kann das Gewicht einzelner Fehlbestimmungen reduziert werden.

Weiterhin wird in einer vorteilhaften Ausgestaltung des Verfahrens
ein bekannter Abstand zwischen zumindest einem ersten und einem zweiten Punkt des richtungsgebenden Markers des Roboters zur Verifikation der Entfernung des Roboters zur Kamera herangezogen und zur Optimierung der Abbildungsfunktion oder zur Bestimmung der Kamerahöhe, insbesondere ohne direkte Messung, verwendet.

Die Erfindung betrifft ferner ein stationäres Kamerasystem, welches zur Durchführung des Verfahrens eingerichtet ist.

Erfindungsgemäß vorgesehen ist ein stationäres Kamerasystem zur Positionserfassung eines mobilen Roboters, wobei der Roboter auf einer Fläche beweglich ist und zumindest einen richtungsgebenden Marker aufweist, wobei das Kamerasystem mehrere Kameras zur zumindest teilweisen Erfassung der Fläche auf jeweils einer Bildebene aufweist, wobei zumindest eine erste Kamera eine innere Kalibrierung und einen Neigungssensor zur Erfassung eines Nickwinkels sowie eines Rollwinkels gegenüber der Lotrechten aufweist, wobei das Kamerasystem ferner eine Bildverarbeitungseinrichtung aufweist, welche eingerichtet ist,
- den Nickwinkel und den Rollwinkel der Blickrichtung der zumindest ersten Kamera gegenüber der Lotrechten mittels des Neigungssensors zu bestimmen,
- ein Koordinatensystem auf Basis der Blickrichtung der ersten Kamera und der Position der ersten Kamera über der Fläche festzulegen,
- eine Abbildungsfunktion auf Basis der inneren Kalibrierung sowie einer vorgebbaren oder berechenbaren Kamerahöhe, des Nickwinkels und des Rollwinkels zur Abbildung eines Bildpunkts der Bildebene der ersten Kamera auf einen Punkt auf der Fläche zu bestimmen,
- die Position des Roboters in der Fläche durch die Erfassung zumindest eines ersten Punkts des richtungsgebenden Markers durch die zumindest erste Kamera, und der Abbildung des ersten Punkts von der Bildebene auf die Fläche in dem Koordinatensystem zu bestimmen, und
- die Ausrichtung des Roboters in der Fläche durch die Erfassung zumindest eines zweiten Punkts des richtungsgebenden Markers durch die zumindest eine Kamera und der Abbildung des zweiten Punkts von der Bildebene auf die Fläche zu bestimmen, in dem die Ausrichtung des richtungsweisenden Markers auf dem Roboter in Bezug zu dem Koordinatensystem gestellt wird,
dadurch gekennzeichnet,
dass das Kamerasystem eine Kamera als weitere Kamera mit einer inneren Kalibrierung zur Erfassung eines Teils der Fläche aufweist, sich die durch die erste Kamera erfassbare Fläche mit der von der weiteren Kamera erfassten Teilfläche in zumindest einer Überlappungsfläche teilweise überschneidet, und das Kamerasystem eingerichtet ist, zur Durchführung einer relativen externen Kalibrierung für die weitere Kamera im Bezug zur ersten Kamera, die Teilschritte auszuführen:
i. Positionierung des Roboters in der Überlappungsfläche;
ii. Bestimmung von zumindest einem Punkt des richtungsgebenden Markers durch die zumindest erste Kamera zwecks Bestimmung von Position und Ausrichtung des Roboters auf der Fläche; Erfassen von zugehörigen Bildpunkten in der Bildebene der weiteren Kamera;
iii. Veränderung der Position des Roboters und Wiederholung von Schritt ii bis mindestens eine ausreichende Anzahl unabhängiger Datenpaare zur Bestimmung der Parameter einer Abbildungsfunktion zur Abbildung eines Bildpunktes der Bildebene der weiteren Kamera auf einen Punkt auf der Fläche vorliegt;
iv. Bestimmung dieser Abbildungsfunktion für die weitere Kamera zwecks Ermittlung von Position und Ausrichtung des Roboters über die Bildebene der weiteren Kamera.

In vorteilhaften Ausgestaltungen ist das stationäre Kamerasystem eingerichtet, die vorbeschriebenen Verfahrensschritte zur Kalibrierung eines stationären Kamerasystems auszuüben, wobei es die in diesem Zusammenhang beschriebenen Merkmale aufweisen kann.

### Zeichnungen

Die nachfolgend beschriebenen, schematischen Zeichnungen dienen der Erläuterung und zum besseren Verständnis der Erfindung.

Es zeigen
- Fig. 1: eine Skizze eines stationären Kamerasystems mit einem von einer Kamera erfassbaren Roboterfahrzeug;
- Fig. 2: eine Skizze zur Auswirkung fehlerhafter Sensorwerte eines Neigungssensors.

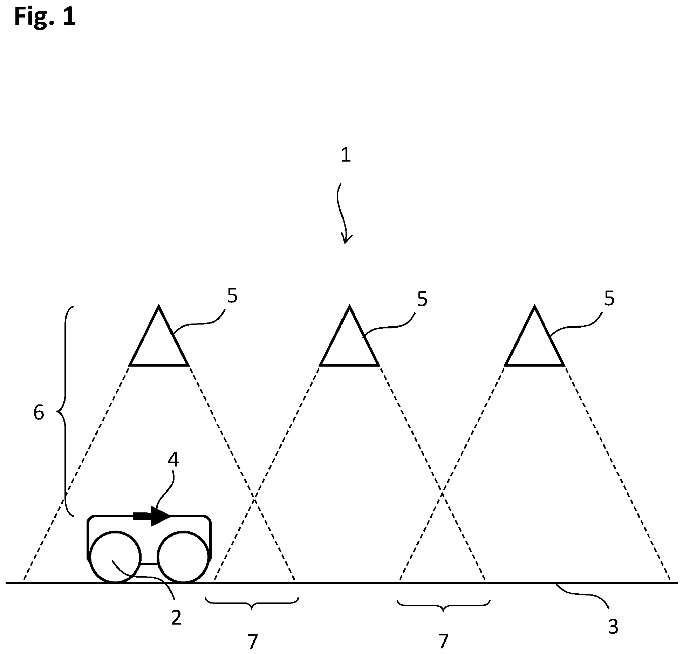

Fig. 1 zeigt eine Skizze eines stationären Kamerasystems mit einem von einer Kamera erfassbaren Roboterfahrzeug.

Aus Fig. 1 ist ein stationäres Kamerasystems 1 zur Positionserfassung eines mobilen Roboters 2 ersichtlich, wobei der Roboter 2 auf einer Fläche 3 beweglich ist und zumindest einen richtungsgebenden Marker 4 aufweist.

Das Kamerasystem 1 weist mehrere Kameras 5 zur zumindest teilweisen Erfassung der Fläche 3 auf jeweils einer Bildebene auf, wobei zumindest eine erste Kamera 5 einen Neigungssensor zur Erfassung eines Nickwinkels sowie eines Rollwinkels gegenüber der Lotrechten aufweist.

Die Kameras 5 weisen eine innere Kalibrierung auf und sind über der Fläche 3 positioniert. Aus Fig. 1 ersichtlich weist das Kamerasystem 1 mehrere weitere Kameras 5 zur Erfassung jeweils eines Teils der Fläche 3 auf, wobei sich die durch die weiteren Kamera 5 jeweils erfassbaren Flächen mit zumindest einer der von einer anderen Kamera 5 erfassten Teilfläche in einer jeweiligen Überlappungsfläche 7 zumindest teilweise überschneiden.

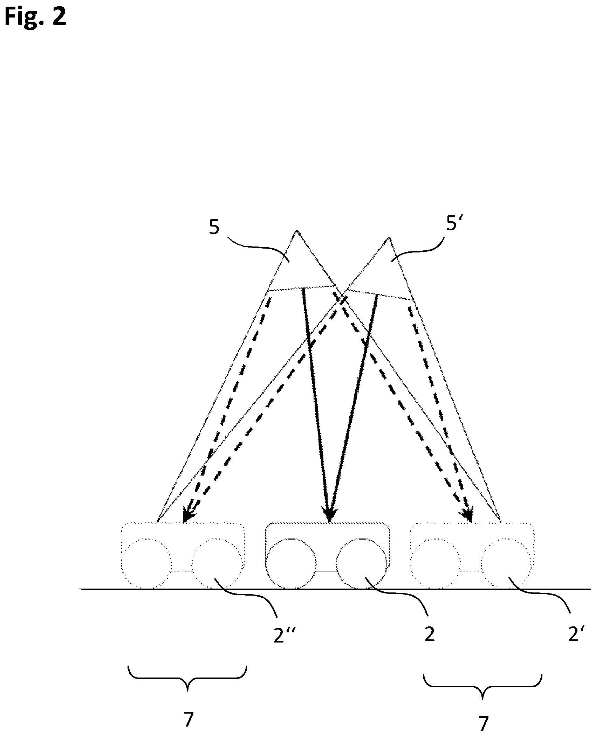

Fig. 2 zeigt eine Skizze zur Auswirkung fehlerhafter Sensorwerte eines Neigungssensors.

Die Kamera 5, dargestellt in ihrer tatsächlichen Position, ist etwas anders geneigt als in der durch den Neigungssensor gemessen Position, dargestellt durch Kamera 5'. Der Roboter 2 wird deshalb von Kamera 5 tatsächlich unter einem anderen Winkel gesehen als vermeintlich von Kamera 5`. Da die Kalibrierung der Kamera 5' jedoch relativ, auf Basis von Kalibriermessungen unter Positionierung des Roboters 2 am Bildrand in den Überlappungsflächen 7, dargestellt durch Roboter 2' und Roboter 2" erfolgt, führt die fehlerhafte Neigungsbestimmung zwar zu einer fälschlichen Position einer Kamera 5', relativ zu den korrekten Positionen des Roboters 2' und 2" ist jedoch auch durch die fehlerhaft kalibrierte Kamera 5' die Position des Roboters 2 weiterhin sehr genau bestimmbar. Der Positionsfehler des Roboters 2 hängt maßgeblich von der etwas anderen projektiven Bildverzerrung durch die andere Neigung ab, sie ist bei einer Kameraausrichtung zum Nadir relativ gering.

## Patentansprüche

1. Verfahren zur Kalibrierung eines stationären Kamerasystems (1) zur Positionserfassung eines mobilen Roboters (2) in einer Fläche (3), auf der der Roboter (2) beweglich ist, wobei der mobile Roboter (2) zumindest einen richtungsgebenden Marker (4) aufweist und wobei das Kamerasystem (1) mehrere Kameras (5) zur zumindest teilweisen Erfassung der Fläche (3) auf jeweils einer Bildebene aufweist, wobei zumindest eine erste dieser Kameras (5) einen Neigungssensor zur Erfassung eines Nickwinkels sowie eines Rollwinkels gegenüber der Lotrechten aufweist, mit den Schritten
a) Bereitstellung einer auf einer inneren Kalibrierung dieser ersten Kamera (5) beruhenden Kamera-Abbildungsfunktion oder mehrerer auf einer jeweiligen inneren Kalibrierung dieser ersten und weiterer Kameras (5) beruhenden Kamera-Abbildungsfunktionen;
b) Durchführung einer externen Kalibrierung für die zumindest eine erste Kamera (5), durch die Ausführung der Teilschritte
i. Wahl einer Befestigungsposition der ersten Kamera (5) über der Fläche (3);
ii. Bestimmung des Nickwinkels und des Rollwinkels der Blickrichtung der zumindest ersten Kamera (5) gegenüber der Lotrechten mittels des Neigungssensors;
iii. Bestimmung der Kamerahöhe (6) der ersten Kamera (5) über dem richtungsgebenden Marker (4) des Roboters (2);
iv. Festlegung eines Koordinatensystems auf Basis der Blickrichtung der ersten Kamera (5) und der Position der ersten Kamera (5) über der Fläche (3);
v. Bestimmung einer Abbildungsfunktion zur Abbildung eines Bildpunktes der Bildebene der ersten Kamera (5) auf einen Punkt auf der Fläche (3) auf Basis der auf der inneren Kalibrierung beruhenden Kamera-Abbildungsfunktion sowie der Kamerahöhe (6), des Nickwinkels und des Rollwinkels;
vi. Bestimmung der Position des Roboters (2) in der Fläche (3) durch die Erfassung zumindest eines ersten Punkts des richtungsgebenden Markers (4) durch die zumindest erste Kamera (5), und der Abbildung des ersten Punkts von der Bildebene auf die Fläche (3);
vii. Bestimmung der Ausrichtung des Roboters (2) in der Fläche (3) durch die Erfassung zumindest eines zweiten Punkts des richtungsgebenden Markers (4) durch die zumindest eine Kamera (5) und der Abbildung des zweiten Punkts von der Bildebene auf die Fläche (3); Bestimmung der Ausrichtung des Roboters (2) auf der Fläche (3) auf Grundlage der auf die Fläche (3) abgebildeten Punkte des richtungsweisenden Markers (4); Bestimmung einer Ausrichtung des Roboters (2) in Bezug auf das Koordinatensystem;
**dadurch gekennzeichnet, dass** eine weitere Kamera (5) dieser Kameras (5) mit einer inneren Kalibrierung zur Erfassung eines Teils der Fläche (3) aufweist, wobei sich die durch die erste Kamera (5) erfassbare Fläche (3) mit der von der weiteren Kamera (5) erfassten Teilfläche in zumindest einer Überlappungsfläche (7) teilweise überschneidet, und dem Schritt
c) Durchführung einer relativen externen Kalibrierung für die weitere Kamera (5) im Bezug zur ersten Kamera (5), durch die Ausführung der Teilschritte
i. Positionierung des Roboters (2) in der Überlappungsfläche;
ii. Bestimmung von zumindest einem Punkt des richtungsgebenden Markers (4) durch die zumindest erste Kamera (5) zwecks Bestimmung von Position und Ausrichtung des Roboters (2) auf der Fläche (3); Erfassen von zugehörigen Bildpunkten in der Bildebene der weiteren Kamera (5);
iii. Veränderung der Position des Roboters (2) und Wiederholung von Schritt ii bis mindestens eine ausreichende Anzahl unabhängiger Datenpaare zur Bestimmung der Parameter einer Abbildungsfunktion zur Abbildung eines Bildpunktes der Bildebene der weiteren Kamera (5) auf einen Punkt auf der Fläche (3) vorliegt;
iv. Bestimmung dieser Abbildungsfunktion für die weitere Kamera (5) zwecks Ermittlung von Position und Ausrichtung des Roboters (2) über die Bildebene der weiteren Kamera (5)

2. Verfahren nach Anspruch 1, wobei das Kamerasystem (1) mehrere weitere Kameras (5) mit einer inneren Kalibrierung zur Erfassung jeweils eines Teils der Fläche (3) aufweist, wobei sich die durch die weiteren Kameras (5) jeweils erfassbaren Flächen mit zumindest einer der von einer anderen Kamera (5) erfassten Teilfläche in einer jeweiligen Überlappungsfläche (7) zumindest teilweise überschneiden, und wobei zumindest für eine der weiteren Kameras (5) eine externe Kalibrierung nach einer der vorherigen Ansprüche durchgeführt ist, mit einem Schritt für eine d) Sukzessive Durchführung einer relativen externen Kalibrierung für eine weitere Kamera (5) im Bezug zu einer extern kalibrierten Kamera (5), durch die Ausführung der Teilschritte
i. Positionierung des Roboters (2) in der Überlappungsfläche (7) zwischen kalibrierter und der zu kalibrierenden weiteren Kamera (5);
ii. Bestimmung von zumindest einem ersten Punkt des richtungsgebenden Markers (4) durch die kalibrierte Kamera (5) zwecks Bestimmung von Position und Ausrichtung des Roboters (2) auf der Fläche; Erfassen von zugehörigen Bildpunkten in der Bildebene der zu kalibrierenden weiteren Kamera (5);
iii. Veränderung der Position des Roboters (2) und Wiederholung von Schritt ii bis mindestens eine ausreichende Anzahl unabhängiger Datenpaare zur Bestimmung der Parameter einer Abbildungsfunktion zur Abbildung eines Bildpunktes der Bildebene der zu kalibrierenden weiteren Kamera (5) auf einen Punkt auf der Fläche (3) vorliegt;
iv. Bestimmung der Abbildungsfunktion für die zu kalibrierende weitere Kamera (5) zwecks Ermittlung von Position und Ausrichtung des Roboters (2) über die Bildebene der zu kalibrierenden weiteren Kamera (5);
v. Wiederholung der Schritte i. bis iv. für eine sukzessive weitere Kamera (5), durch welche eine Teilfläche erfassbar ist, die eine Überlappungsfläche (7) mit einer durch eine kalibrierte Kamera (5) erfasste Teilfläche aufweist.

3. Verfahren nach einem der vorherigen Ansprüche, wobei die Bereitstellung der auf einer inneren Kalibrierung zumindest einer ersten oder mehrerer Kameras (5) der jeweiligen Kamera (5) beruhenden Kamera-Abbildungsfunktion erfolgt durch die für die jeweilige Kamera (5) durchzuführenden Teilschritte
i. Bereitstellung und orthogonale Positionierung einer nicht kalibrierten Kamera (5) vor einem Kalibriermuster mit Kreuzungspunkten;
ii. Einmessen des Kalibriermusters sowie des Projektionszentrums der Kamera (5);
iii. Detektion der Kreuzungspunkte in der Bildebene der Kamera (5);
iv. Bestimmung der Kamera-Abbildungsfunktion dieser Kamera (5) auf Grundlage des eingemessenen sowie der detektierten Kreuzungspunkte des Kalibriermusters.

4. Verfahren nach einem der vorherigen Ansprüche zur Kalibrierung eines stationären Kamerasystems (1) zur Positionserfassung eines Roboters (2),
**gekennzeichnet durch** die Teilschritte, dass
i. zumindest eine Position einer Kamera (5) des Kamerasystems (1) verändert wird,
ii. die Veränderung der Position der Kamera (5) gegenüber dem Koordinatensystem (1) erfasst wird und iii. die Positionsveränderung der Kamera (5) durch eine Änderung der zugehörigen Abbildungsfunktion kompensiert wird.

5. Verfahren nach einem der vorherigen Ansprüche zur Kalibrierung eines stationären Kamerasystems (1) zur Positionserfassung eines Roboters (1),
**dadurch gekennzeichnet, dass**
in den Überlappungsflächen (7) erfasste Koordinaten regelmäßig zur Überprüfung und Nachkalibrierung der Abbildungsfunktion verwendet werden.

6. Verfahren nach einem der vorherigen Ansprüche zur Kalibrierung eines stationären Kamerasystems (1) zur Positionserfassung eines Roboters (2),
**dadurch gekennzeichnet, dass**
ein bekannter Abstand zwischen zumindest einem erstem und einem zweiten Punkt des richtungsgebenden Markers (4) des Roboters (2) zur Bestimmung der Kamerahöhe oder zur Verifikation der Entfernung des Roboters (2) zur Kamera (5) herangezogen und zur Optimierung der Abbildungsfunktion verwendet wird.

7. Stationäres Kamerasystem (1) zur Positionserfassung eines mobilen Roboters (2) in einer Fläche (3), auf der der Roboter (2) beweglich ist, wobei der Roboter (2) zumindest einen richtungsgebenden Marker (4) aufweist und wobei das Kamerasystem (1) mehrere Kameras (5) zur zumindest teilweisen Erfassung der Fläche (3) auf jeweils einer Bildebene aufweist, wobei zumindest eine erste Kamera (5) eine innere Kalibrierung und einen Neigungssensor zur Erfassung eines Nickwinkels sowie eines Rollwinkels gegenüber der Lotrechten aufweist, wobei das Kamerasystem (1) ferner eine Bildverarbeitungseinrichtung aufweist, welcher eine auf der inneren Kalibrierung dieser ersten Kamera (5) beruhenden Kamera-Abbildungsfunktion vorliegt und welche eingerichtet ist,
- den Nickwinkel und den Rollwinkel der Blickrichtung der zumindest ersten Kamera (5) gegenüber der Lotrechten mittels des Neigungssensors zu bestimmen,
- ein Koordinatensystem auf Basis der Blickrichtung der ersten Kamera (5) und der Position der ersten Kamera (5) über der Fläche (3) festzulegen,
- eine Abbildungsfunktion zur Abbildung eines Bildpunktes der Bildebene der ersten Kamera (5) auf einen Punkt auf der Fläche (3) auf Basis der auf der inneren Kalibrierung der ersten Kamera (5) beruhenden Kamera-Abbildungsfunktion sowie einer vorgebbaren oder berechenbaren Kamerahöhe (6), des Nickwinkels und des Rollwinkels der ersten Kamera (5) zu bestimmen,
- die Position des Roboters (2) in der Fläche (3) durch die Erfassung zumindest eines ersten Punkts des richtungsgebenden Markers (4) durch die zumindest erste Kamera (5), und der Abbildung des ersten Punkts von der Bildebene auf die Fläche (3) in dem Koordinatensystem zu bestimmen, und
- die Ausrichtung des Roboters (2) in der Fläche (3) durch die Erfassung zumindest eines zweiten Punkts des richtungsgebenden Markers (4)durch die zumindest eine Kamera (5) und der Abbildung des zweiten Punkts von der Bildebene auf die Fläche (3) zu bestimmen, in dem die Ausrichtung des richtungsweisenden Markers (4) auf dem Roboter (2) in Bezug zu dem Koordinatensystem gestellt wird,
**dadurch gekennzeichnet, dass** das Kamerasystem (1) eine Kamera (5) als weitere Kamera (5) mit einer inneren Kalibrierung zur Erfassung eines Teils der Fläche (3) aufweist, sich die durch die erste Kamera (5) erfassbare Fläche (3) mit der von der weiteren Kamera (5) erfassten Teilfläche in zumindest einer Überlappungsfläche (7) teilweise überschneidet, und das Kamerasystem (1) eingerichtet ist, zur Durchführung einer relativen externen Kalibrierung für die weitere Kamera (5) im Bezug zur ersten Kamera (5), die Teilschritte auszuführen:
i. Positionierung des Roboters (2) in der Überlappungsfläche;
ii. Bestimmung von zumindest einem Punkt des richtungsgebenden Markers (4) durch die zumindest erste Kamera (5) zwecks Bestimmung von Position und Ausrichtung des Roboters (2) auf der Fläche (3); Erfassen von zugehörigen Bildpunkten in der Bildebene der weiteren Kamera (5);
iii. Veränderung der Position des Roboters (2) und Wiederholung von Schritt ii bis mindestens eine ausreichende Anzahl unabhängiger Datenpaare zur Bestimmung der Parameter einer Abbildungsfunktion zur Abbildung eines Bildpunktes der Bildebene der weiteren Kamera (5) auf einen Punkt auf der Fläche (3) vorliegt;
iv. Bestimmung dieser Abbildungsfunktion für die weitere Kamera (5) zwecks Ermittlung von Position und Ausrichtung des Roboters (2) über die Bildebene der weiteren Kamera (5).

## Claims

1. Method for calibrating a stationary camera system (1) for detecting the position of a mobile robot (2) in a surface (3) on which the robot (2) can be moved, wherein the mobile robot (2) has at least one direction-indicating marker (4) and wherein the camera system (1) has a plurality of cameras (5) for at least partially detecting the surface (3) on a respective image plane, wherein at least one first camera (5) has an inclination sensor for detecting a pitch angle as well as a roll angle relative to the perpendicular, with the steps
a) providing a camera display function involving an internal calibration of this first camera (5), or a plurality of camera display functions involving a respective internal calibration of this first and further cameras (5);
b) carrying out an external calibration for the at least one first camera (5), by carrying out the sub-steps
i. choosing an attachment position of the first camera (5) via the surface (3);
ii. determining the pitch angle and the roll angle of the line of sight of the at least first camera (5) relative to the perpendicular by means of the inclination sensor;
iii. determining the camera height (6) of the first camera (5) via the direction-indicating marker (4) of the robot (2);
iv. fixing a co-ordinate system on the basis of the line of sight of the first camera (5) and the position of the first camera (5) via the surface (3);
v. determining a display function for displaying an image point of the image plane of the first camera (5) on a point on the surface (3) on the basis of the camera display function involving the internal calibration, as well as the camera height (6), the pitch angle and the roll angle;
vi. determining the position of the robot (2) in the surface (3) by detecting at least one first point of the direction-indicating marker (4) by the at least first camera (5), and displaying the first point of the image plane on the surface (3);
vii. determining the alignment of the robot (2) in the surface (3) by detecting at least a second point of the direction-indicating marker (4) by the at least one camera (5) and displaying the second point of the image plane on the surface (3); determining the alignment of the robot (2) on the surface (3) on the basis of the points of the direction-indicating marker (4) displayed on the surface (3); determining an alignment of the robot (2) in respect of the co-ordinate system;
**characterised in that** a further camera (5) of these cameras (5) has with an internal calibration for detecting a part of the surface (3), wherein the surface (3) which can be detected by the first camera (5) overlaps at least partially with the partial surface detected by the further camera (5) in at least one overlap area (7), and the step
c) carrying out a relative external calibration for the further camera (5) in respect of the first camera (5) by carrying out the sub-steps
i. positioning the robot (2) in the overlap area;
ii. determining at least one point of the direction-indicating marker (4) by the at least first camera (5) for the purpose of determining position and alignment of the robot (2) on the surface (3); detecting related image points in the image plane of the further camera (5);
iii. changing the position of the robot (2) and repeating step ii until there is at least a sufficient number of independent data pairs for determining the parameters of a display function for displaying an image point of the image plane of the further camera (5) on a point on the surface (3);
iv. determining this display function for the further camera (5) for the purpose of ascertaining the position and alignment of the robot (2) via the image plane of the further camera (5).

2. Method according to claim 1, wherein the camera system (1) has a plurality of further cameras (5) with an internal calibration for detecting respectively a part of the surface (3), wherein the surfaces which can be detected respectively by the further cameras (5) overlap at least partially with at least one of the partial surfaces detected by another camera (5) in a respective overlap area (7), and wherein at least for one of the further cameras (5) an external calibration according to one of the preceding claims is carried out, with a step for d) successively carrying out a relative external calibration for a further camera (5) in respect of an externally calibrated camera (5), by carrying out the sub-steps
i. positioning the robot (2) in the overlap area (7) between the calibrated camera and the further camera (5) to be calibrated;
ii. determining at least one first point of the direction-indicating marker (4) by the calibrated camera (5) for the purpose of determining the position and alignment of the robot (2) on the surface; detecting related image points in the image plane of the further camera (5) to be calibrated;
iii. changing the position of the robot (2) and repeating step ii until there is at least a sufficient number of independent data pairs for determining the parameters of a display function for displaying an image point of the image plane of the further camera (5) to be calibrated on a point on the surface (3);
iv. determining the display function for the further camera (5) for the purpose of ascertaining the position and alignment of the robot (2) via the image plane of the further camera (5) to be calibrated;
v. repeating steps i. to iv. for a successive further camera (5), by which a partial surface which has an overlap area (7) with a partial surface detected by a calibrated camera (5) can be detected.

3. Method according to one of the preceding claims, wherein the camera display function involving an internal calibration at least of a first or a plurality of cameras (5) of the respective camera (5) is provided by the sub-steps being carried out for the respective camera (5)
i. providing and orthogonally positioning a non-calibrated camera (5) before a calibration pattern with intersection points;
ii. gauging the calibration pattern as well as the projection centre of the camera (5);
iii. detecting the intersection points in the image plane of the camera (5);
iv. determining the camera display function of this camera (5) on the basis of the gauged as well as the detected intersection points of the calibration pattern.

4. Method according to one of the preceding claims for calibrating a stationary camera system (1) for detecting the position of a robot (2), **characterised by** the sub-steps of
i. changing at least one position of a camera (5) of the camera system (1),
ii. detecting the change in position of the camera (5) relative to the co-ordinate system (1), and iii. compensating the change in position of the camera (5) by a change in the related display function.

5. Method according to one of the preceding claims for calibrating a stationary camera system (1) for detecting the position of a robot (1),
**characterised in that**
co-ordinates detected in the overlap areas (7) are regularly used to check and recalibrate the display function.

6. Method according to one of the preceding claims for calibrating a stationary camera system (1) for detecting the position of a robot (2),
**characterised in that**
a known distance between at least a first and a second point of the direction-indicating marker (4) of the robot (2) is used to determine the camera height or to verify the distance of the robot (2) from the camera (5), and is used to optimise the display function.

7. Stationary camera system (1) for detecting the position of a mobile robot (2) in a surface (3) on which the robot (2) can be moved, wherein the mobile robot (2) has at least one direction-indicating marker (4) and wherein the camera system (1) has a plurality of cameras (5) for at least partially detecting the surface (3) on a respective image plane, wherein at least one first camera (5) has an internal calibration and an inclination sensor for detecting a pitch angle as well as a roll angle relative to the perpendicular, wherein the camera system (1) also has an image-processing device on which is present a camera display function involving an internal calibration of this first camera (5), and which is designed
- to determine the pitch angle and the roll angle of the line of sight of the at least first camera (5) relative to the perpendicular by means of the inclination sensor,
- to fix a co-ordinate system on the basis of the line of sight of the first camera (5) and the position of the first camera (5) via the surface (3),
- to determine a display function for displaying an image point of the image plane of the first camera (5) on a point on the surface (3) on the basis of the camera display function involving the internal calibration of the first camera (5) as well as a camera height (6) which can be predicted or calculated, the pitch angle and the roll angle of the first camera (5),
- determining the position of the robot (2) in the surface (3) by detecting at least a first point of the direction-indicating marker (4) by the at least first camera (5), and displaying the first point of the image plane on the surface (3) in the co-ordinate system, and
- determining the alignment of the robot (2) in the surface (3) by detecting at least a second point of the direction-indicating marker (4) by the at least one camera (5) and displaying the second point of the image plane on the surface (3) by placing the alignment of the direction-indicating marker (4) on the robot (2) in respect of the co-ordinate system,
**characterised in that** the camera system (1) has a camera (5) as further camera (5) with an internal calibration for detecting a part of the surface (3), the surface (3) which can be detected by the first camera (5) overlaps at least partially with the partial surface detected by the further camera (5) in at least one overlap area (7), and the camera system (1) is designed to carry out the sub-steps for carrying out a relative external calibration for the further camera (5) in respect of the first camera (5):
i. positioning the robot (2) in the overlap area;
ii. determining at least one point of the direction-indicating marker (4) by the at least first camera (5) for the purpose of determining position and alignment of the robot (2) on the surface (3); detecting related image points in the image plane of the further camera (5);
iii. changing the position of the robot (2) and repeating step ii until there is at least a sufficient number of independent data pairs for determining the parameters of a display function for displaying an image point of the image plane of the further camera (5) on a point on the surface (3);
iv. determining this display function for the further camera (5) for the purpose of ascertaining the position and alignment of the robot (2) via the image plane of the further camera (5).

## Revendications

1. Procédé d'étalonnage d'un système de caméra fixe (1) permettant la détection de la position d'un robot mobile (2) dans une surface (3) sur laquelle le robot (2) est mobile, le robot mobile (2) présentant au moins un marqueur indicateur de direction (4) et le système de caméra (1) présentant plusieurs caméras (5) pour la détection au moins partielle de la surface (3) sur respectivement un plan d'image, au moins une première de ces caméras (5) présentant un capteur d'inclinaison pour la détection d'un angle de tangage ainsi que d'un angle de roulis par rapport aux verticales, avec les étapes suivantes
a) mise à disposition d'une fonction de représentation de caméra basée sur un étalonnage interne de cette première caméra (5) ou de plusieurs fonctions d'imagerie de caméra basées sur un étalonnage interne respectif de cette première caméra et d'autres caméras (5) ;
b) réalisation d'un étalonnage externe pour ladite au moins une première caméra (5), en exécutant les étapes partielles suivantes
i. Choix d'une position de fixation de la première caméra (5) au-dessus de la surface (3) ;
ii. Détermination de l'angle de tangage et de l'angle de roulis de la direction de vision de l'au moins première caméra (5) par rapport à la verticale au moyen du capteur d'inclinaison ;
iii. Détermination de la hauteur de caméra (6) de la première caméra (5) au-dessus du marqueur indicateur de direction (4) du robot (2) ;
iv. Définition d'un système de coordonnées sur la base de la direction de vision de la première caméra (5) et de la position de la première caméra (5) au-dessus de la surface (3) ;
v. Détermination d'une fonction d'imagerie pour représenter un point d'image du plan d'image de la première caméra (5) sur un point sur la surface (3) sur la base de la fonction d'imagerie de la caméra basée sur l'étalonnage interne ainsi que de la hauteur de la caméra (6), de l'angle de tangage et de l'angle de roulis ;
vi. Détermination de la position du robot (2) dans la surface (3) par la détection d'au moins un premier point du marqueur indicateur de direction (4) par l'au moins première caméra (5), et la représentation du premier point du plan d'image sur la surface (3) ;
vii. Détermination de l'orientation du robot (2) dans la surface (3) par la détection d'au moins un deuxième point du marqueur indicateur de direction (4) par l'au moins une caméra (5) et la représentation du deuxième point du plan d'image sur la surface (3) ; détermination de l'orientation du robot (2) sur la surface (3) sur la base des points du marqueur indicateur de direction (4) représentés sur la surface (3) ; détermination d'une orientation du robot (2) par rapport au système de coordonnées ;
**caractérisé en ce qu'**une autre caméra (5) présente ces caméras (5) avec un étalonnage interne pour la détection d'une partie de la surface (3), la surface (3) pouvant être détectée par la première caméra (5) se recoupant partiellement avec la surface partielle détectée par l'autre caméra (5) dans au moins une surface de chevauchement (7), et à l'étape
c) réalisation d'un étalonnage externe relatif pour l'autre caméra (5) par rapport à la première caméra (5), en exécutant les sous-étapes suivantes
i. Positionnement du robot (2) dans la zone de chevauchement ;
ii. Détermination d'au moins un point du marqueur indicateur de direction (4) par l'au moins première caméra (5) afin de déterminer la position et l'orientation du robot (2) sur la surface (3) ; saisie de points d'image correspondants dans le plan image de l'autre caméra (5) ;
iii. Modification de la position du robot (2) et répétition de l'étape ii jusqu'à ce que l'on dispose d'au moins un nombre suffisant de paires de données indépendantes pour déterminer les paramètres d'une fonction de représentation pour représenter un point d'image du plan d'image de l'autre caméra (5) sur un point sur la surface (3) ;
iv. Détermination de cette fonction de représentation pour l'autre caméra (5) afin de déterminer la position et l'orientation du robot (2) via le plan d'image de l'autre caméra (5).

2. Procédé selon la revendication 1, dans lequel le système de caméra (1) présente plusieurs autres caméras (5) avec un étalonnage interne pour la détection respectivement d'une partie de la surface (3), les surfaces pouvant être détectées respectivement par les autres caméras (5) se recoupant au moins partiellement avec au moins une de la surface partielle détectée par une autre caméra (5) dans une surface de chevauchement respective (7), et un étalonnage externe selon l'une des revendications précédentes étant effectué pour au moins l'une des autres caméras (5), avec une étape pour une d) réalisation successive d'un étalonnage externe relatif pour une autre caméra (5) par rapport à une caméra (5) étalonnée de manière externe, par l'exécution des étapes partielles suivantes
i. Positionnement du robot (2) dans la zone de chevauchement (7) entre la caméra étalonné et l'autre caméra (5) à étalonner ;
ii. Détermination d'au moins un premier point du marqueur indicateur de direction (4) par la caméra étalonnée (5) en vue de déterminer la position et l'orientation du robot (2) sur la surface ; saisie de points d'image correspondants dans le plan d'image de l'autre caméra (5) à étalonner ;
iii. Modification de la position du robot (2) et répétition de l'étape ii jusqu'à ce que l'on dispose d'au moins un nombre suffisant de paires de données indépendantes pour déterminer les paramètres d'une fonction de représentation pour représenter un point d'image du plan d'image de l'autre caméra (5) à étalonner sur un point sur la surface (3) ;
iv. Détermination de la fonction de représentation pour l'autre caméra (5) à étalonner afin de déterminer la position et l'orientation du robot (2) via le plan d'image de l'autre caméra (5) à étalonner ;
v. Répétition des étapes i. à iv. pour une autre caméra (5) successive, par laquelle une surface partielle peut être détectée, qui présente une surface de chevauchement (7) avec une surface partielle détectée par une caméra étalonnée (5).

3. Procédé selon l'une des revendications précédentes, dans lequel la mise à disposition de la fonction de représentation de caméra basée sur un étalonnage interne d'au moins une première ou plusieurs caméras (5) de la caméra (5) respective s'effectue par les étapes partielles à effectuer pour la caméra (5) respective
i. Mise à disposition et positionnement orthogonal d'une caméra non étalonnée (5) devant un modèle d'étalonnage comportant des points de croisement ;
ii. Mesure du modèle d'étalonnage ainsi que du centre de projection de la caméra (5) ;
iii. Détection des points de croisement dans le plan d'image de la caméra (5) ;
iv. Détermination de la fonction de représentation de la caméra (5) sur la base des points de croisement mesurés et détectés du motif d'étalonnage.

4. Procédé selon l'une des revendications précédentes pour l'étalonnage d'un système de caméra fixe (1) pour la détection de la position d'un robot (2), **caractérisé par** les étapes partielles selon lesquelles
i. au moins une position d'une caméra (5) du système de caméra (1) est modifiée,
ii. la modification de la position de la caméra (5) par rapport au système de coordonnées (1) est détectée et iii. la modification de la position de la caméra (5) est compensée par une modification de la fonction de représentation correspondante.

5. Procédé selon l'une des revendications précédentes pour étalonner un système de caméra fixe (1) pour la détection de la position d'un robot (1),
**caractérisé en ce que**
les coordonnées saisies dans les zones de chevauchement (7) sont utilisées régulièrement pour vérifier et réétalonner la fonction de représentation.

6. Procédé selon l'une des revendications précédentes pour étalonner un système de caméra fixe (1) pour la détection de la position d'un robot (2),
**caractérisé en ce que**
une distance connue entre au moins un premier et un deuxième point du marqueur indicateur de direction (4) du robot (2) est utilisée pour déterminer la hauteur de la caméra ou pour vérifier la distance du robot (2) par rapport à la caméra (5) et est utilisée pour optimiser la fonction de représentation.

7. Système de caméra fixe (1) pour la détection de la position d'un robot mobile (2) dans une surface (3) sur laquelle le robot (2) est mobile, le robot (2) présentant au moins un marqueur indicateur de direction (4) et le système de caméra (1) présentant plusieurs caméras (5) pour la détection au moins partielle de la surface (3) sur respectivement un plan d'image, au moins une première caméra (5) présentant un étalonnage interne et un capteur d'inclinaison pour la détection d'un angle de tangage ainsi que d'un angle de roulis par rapport à la verticale, le système de caméra (1) présentant en outre un dispositif de traitement d'image auquel est soumise une fonction de représentation de caméra basée sur l'étalonnage interne de cette première caméra (5) et qui est conçu pour
- déterminer l'angle de tangage et l'angle de roulis de la direction de vision de l'au moins première caméra (5) par rapport à la verticale au moyen du capteur d'inclinaison,
- définir un système de coordonnées sur la base de la direction de vision de la première caméra (5) et de la position de la première caméra (5) au-dessus de la surface (3),
- déterminer une fonction de représentation pour représenter un point d'image du plan d'image de la première caméra (5) sur un point sur la surface (3) sur la base de la fonction de représentation de la caméra basée sur l'étalonnage interne de la première caméra (5) ainsi que d'une hauteur de caméra (6) pouvant être prédéfinie ou calculée, de l'angle de tangage et de l'angle de roulis de la première caméra (5),
- déterminer la position du robot (2) dans la surface (3) en détectant au moins un premier point du marqueur indicateur de direction (4) par l'au moins une première caméra (5), et la représentation du premier point depuis le plan d'image sur la surface (3) dans le système de coordonnées, et
- l'orientation du robot (2) dans la surface (3) par la détection d'au moins un deuxième point du marqueur indicateur de direction (4) par l'au moins une caméra (5) et la représentation du deuxième point à partir du plan d'image sur la surface (3), dans lequel l'orientation du marqueur indicateur de direction (4) sur le robot (2) est mise en relation avec le système de coordonnées,
**caractérisé en ce que** le système de caméra (1) présente une caméra (5) comme autre caméra (5) avec un étalonnage interne pour la détection d'une partie de la surface (3), la surface (3) pouvant être détectée par la première caméra (5) se recoupe partiellement avec la surface partielle détectée par l'autre caméra (5) dans au moins une surface de chevauchement (7), et le système de caméra (1) est agencé pour exécuter les étapes partielles pour effectuer un étalonnage externe relatif pour l'autre caméra (5) par rapport à la première caméra (5) :
i. Positionnement du robot (2) dans la zone de chevauchement ;
ii. Détermination d'au moins un point du marqueur indicateur de direction (4) par l'au moins première caméra (5) afin de déterminer la position et l'orientation du robot (2) sur la surface (3) ; saisie de points d'image correspondants dans le plan image de l'autre caméra (5) ;
iii. Modification de la position du robot (2) et répétition de l'étape ii jusqu'à ce que l'on dispose d'au moins un nombre suffisant de paires de données indépendantes pour déterminer les paramètres d'une fonction de représentation pour représenter un point d'image du plan d'image de l'autre caméra (5) sur un point sur la surface (3) ;
iv. Détermination de cette fonction de représentation pour l'autre caméra (5) en vue de déterminer la position et l'orientation du robot (2) via le plan d'image de l'autre caméra (5).
